# DEMANDE DE BREVET EUROPEEN

(11) **EP 0 714 594 A1**
(43) Date de publication de la demande: **05.06.1996**
(21) Numéro de dépôt: 95402706.6
(22) Date de dépôt: 30.11.1995
(51) Int. Cl.: A01G 3/04

(54) **Dispositif taille-haie**

(30) Priorité: 30.11.1994 FR 9414355
(71) Demandeur: MOBIGREEN, F-85170 Saligny (FR)
(72) Inventeur: Faustin, Jean-Claude, F-85170 Saligny (FR)
(74) Mandataire: Fruchard, Guy

(57) **Abrégé**

Le dispositif taille-haie comporte un support (54,89) pour un outil (53), lequel support (89) est porté par un chariot porte-outil (29) qui est monté pour coulisser verticalement sur un chariot intermédiaire (19) lui-même monté pour coulisser sur une poutre horizontale (1) associée à un piétement (3) . Le chariot intermédiaire comporte un cadre (19) comprenant deux montants verticaux (21) formant des glissières pour le coulissement du chariot porte-outil (29), ce chariot porte-outil (29) étant équipé de roues (35) coopérant avec les montants verticaux (21).

## Description

La présente invention concerne un dispositif taille-haie assurant le support et le guidage d'un outil de taille en travail.

On connaît des dispositifs taille-haie assurant le support d'un outil de taille tel qu'un taille-haie portatif le long d'une haie à tailler.

Les dispositifs les plus simples consistent en un piétement mobile, tel qu'un trépied télescopique monté sur des roulettes, au sommet duquel est fixé l'outil. De tels dispositifs permettent de soulager l'opérateur du poids de l'outil. Toutefois, dans la mesure où les roulettes du trépied prennent appui sur un sol le plus souvent irrégulier, la trajectoire de l'outil est elle aussi irrégulière, de sorte que la qualité géométrique de la taille réalisée est insatisfaisante. De plus, la manipulation du trépied télescopique est malcommode, notamment lorsqu'il s'agit de tailler des haies de grande hauteur, et sa stabilité est précaire.

Le document DE-A-32 44 593 décrit un dispositif de ce type, un peu plus sophistiqué, dans lequel l'outil est porté par un support monté pour coulisser verticalement sur un chariot qui est lui-même monté sur des roues. Toutefois, même si la stabilité et la maniabilité du dispositif sont améliorées, l'inconvénient précité relatif à l'irrégularité de la coupe subsiste.

Dans un autre type de dispositif, notamment décrit dans le document FR-A-2 680 444, l'outil est porté par un support monté pour coulisser verticalement sur un chariot intermédiaire qui est lui-même monté pour coulisser sur une poutre horizontale associée à un piétement. Ainsi le guidage de l'outil est assuré indépendamment de l'état de surface du sol sur lequel repose le dispositif. Cependant, la structure de ce dispositif est complexe, fragile et peu commode à installer.

La présente invention a pour objet un perfectionnement à ce type de dispositif.

Selon l'invention, on prévoit un dispositif taille-haie comportant un support pour un outil, ce support étant porté par un chariot porte-outil qui est monté pour coulisser sur un chariot intermédiaire lui-même monté pour coulisser sur une poutre sensiblement horizontale associée à un piétement, dans lequel le chariot intermédiaire comporte un cadre comprenant deux montants verticaux formant des glissières pour le coulissement du chariot porte-outil, ce chariot porte-outil étant équipé de roues coopérant avec les montants verticaux. La fabrication du dispositif est ainsi simple et peu coûteuse et son installation rapide et commode.

Selon une caractéristique avantageuse de l'invention, la poutre horizontale est réalisée sous la forme d'un profilé de section rectangulaire fixé sur le piètement de telle façon que le grand côté de cette section s'étende verticalement, le chariot intermédiaire étant monté pour coulisser sur les bords horizontaux du profilé. La structure de la poutre est ainsi simple et robuste. Sa fabrication est peu coûteuse. L'installation du chariot intermédiaire est simple et rapide. Avantageusement, le chariot intermédiaire est équipé de roues coopérant avec les deux bords horizontaux de la poutre.

Selon une autre caractéristique avantageuse de l'invention, le chariot porte-outil est suspendu à un câble enroulé sur un treuil de manoeuvre disposé en partie basse du chariot intermédiaire, ce câble étant renvoyé en partie haute du chariot intermédiaire. Il est ainsi possible de régler la position verticale de l'outil en manoeuvrant le treuil, ce qui simplifie les manipulations. En outre, ce réglage par treuil permet d'atteindre facilement les parties élevées des haies de grande hauteur sans effort pour l'utilisateur.

Selon encore une autre caractéristique avantageuse de l'invention, le piétement comprend au moins deux pieds comportant chacun un montant central d'axe sensiblement vertical et deux jambes d'appui coudées ayant une extrémité montée sur le montant central pour pivoter autour d'un axe sensiblement parallèle à ce montant. Plus précisément, les jambes d'appui comprennent des tubes montés dans des manchons fixés au montant central. La fabrication, le montage et l'installation du piétement sont ainsi simples et rapides.

D'autres caractéristiques et avantages de l'invention apparaîtront à la lecture de la description qui suit de deux modes de réalisation particuliers non limitatifs en liaison avec les figures en annexe, parmi lesquelles :
- la figure 1 est une vue en perspective d'un dispositif taille-haie selon un premier mode de réalisation conforme à l'invention ;
- la figure 2 est une vue analogue à la figure 1 d'un dispositif taille-haie selon un second mode de réalisation conforme à l'invention ;
- la figure 3 est une vue partielle en perspective suivant la flèche III de la figure 2, illustrant le détail de réalisation de la fixation de l'organe de manoeuvre à l'arbre du support d'outil.

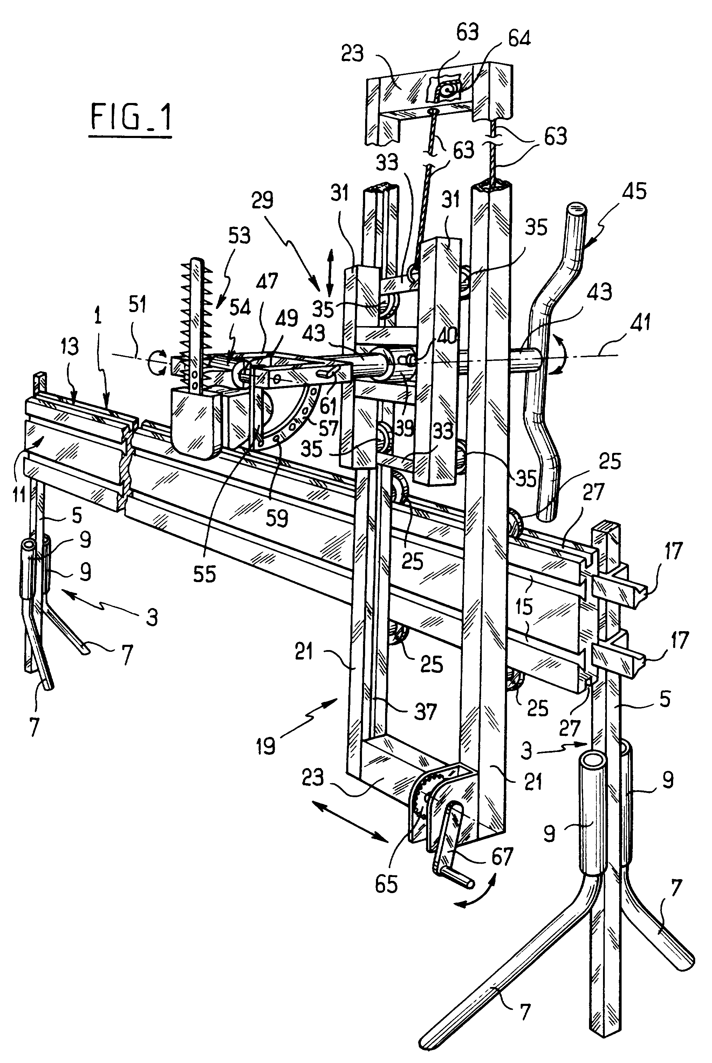

En référence à la figure 1, le dispositif taille-haie comporte une poutre 1 sensiblement horizontale associée à un piétement qui est constitué par deux pieds 3. Chacun de ces deux pieds comporte un montant central 5 d'axe sensiblement vertical et deux jambes d'appui coudées 7 ayant une extrémité montée sur le montant central 5 pour pivoter autour d'un axe sensiblement parallèle à celui-ci. Dans l'exemple illustré ici, les jambes d'appui 7 sont constituées par des tubes coudés dont la partie supérieure est montée à rotation dans des manchons 9 solidaires du montant central 5.

La poutre 1 est réalisée sous forme d'un profilé de section rectangulaire fixé sur les pieds 3 de telle façon que le grand côté de cette section s'étende verticalement. La poutre 1 possède ainsi deux faces verticales 11 et deux faces horizontales 13. Pour sa fixation aux pieds 3, la poutre 1 présente quatre rainures longitudinales 15 en forme de queue d'aronde qui débouchent, pour deux d'entre elles, sur l'une des faces verticales 11 et, pour les deux autres, sur l'autre face verticale 11. Seules les deux rainures 15 qui débouchent sur une même face sont utilisées pour la fixation de la poutre 1 au pied 3, la symétrie de la poutre 1 servant simplement à faciliter le montage. Deux pattes de raccordement 17, de forme complémentaire de celle des rainures longitudinales 15, sont engagées dans les rainures 15 et sont par ailleurs fixées au montant central 5 des pieds 3. En outre, ces deux pattes 17 sont suffisamment longues pour pouvoir assurer une liaison avec une autre poutre non représentée similaire à la poutre 1 en pénétrant dans les rainures 15 de cette autre poutre.

Par ailleurs, la poutre 1 porte un chariot intermédiaire 19 qui est monté pour coulisser sur celle-ci. Dans l'exemple illustré, le chariot intermédiaire 19 est réalisé sous la forme d'un cadre comportant deux montants verticaux 21 et deux montants transversaux 23 fixés aux extrémités supérieure et inférieure des montants 21. Le chariot 19 est de plus équipé de quatre roues 25 montées à rotation sur les montants 21. Chaque montant 21 est ainsi équipé de deux roues 25 qui roulent en appui sur les faces horizontales 13 de la poutre 1. La poutre 1 comporte deux rainures longitudinales 27 qui débouchent sur les faces horizontales 13. Les roues 25 présentent un bord formant un disque de grand diamètre de façon analogue à une roue d'essieu ferroviaire et sont engagées dans les rainures 27, de sorte que la poutre 1 forme un rail de guidage pour le chariot intermédiaire 19.

Sur le chariot intermédiaire 19 est monté un chariot porte-outil 29 qui peut coulisser verticalement le long des montants 21 du cadre formant le chariot 19. Ce chariot porte-outil 29 comporte ici deux montants verticaux 31 dont les extrémités supérieure et inférieure sont reliées par deux montants transversaux 33. Chacun des montants 31 est équipé de deux roues 35 qui roulent en appui sur des faces en regard des montants 21 du chariot intermédiaire 19. Les roues 35 sont similaires aux roues 25 et chaque montant 21 présente une rainure longitudinale 37 qui débouche sur la face du montant 21 sur laquelle roulent les deux roues 35 correspondantes. Les roues 35 sont engagées dans les rainures 37 des montants 21 qui forment ainsi un rail de guidage pour le chariot porte-outil 29.

Le chariot porte-outil 29 est suspendu à un câble 63 engagé en partie haute du chariot intermédiaire sur des organes de guidages, tels que deux poulies 64 dont une seule est visible à la figure 1, montés à l'intérieur du montant supérieur 23 du cadre formant le chariot intermédiaire 19, ce câble étant d'une part accroché au montant transversal supérieur 33 du chariot porte-outil 29 et d'autre part enroulé sur un treuil de manoeuvre 65 du type à cliquet disposé en partie basse du chariot intermédiaire 19 et équipé d'une manivelle 67.

Un manchon 39 est fixé sur le chariot porte-outil 29 et s'étend suivant un axe horizontal 41 sensiblement perpendiculaire à la poutre 1. Ce manchon 39 est traversé par un arbre 43 qui peut tourner à l'intérieur de ce manchon autour de l'axe 41.

L'arbre 43 est équipé, à une de ses extrémités, d'un organe de manoeuvre 45 qui est ici illustré sous la forme d'un guidon. Un cadre 47 en forme de U est rigidement fixé à l'autre extrémité de l'arbre 43 et s'étend suivant un plan contenant l'axe 41. Une tige 49 est montée entre les extrémités libres des deux branches du cadre 47 pour pivoter autour d'un axe 51 sensiblement perpendiculaire à l'axe 41. Sur ces deux tiges 49, est fixé un outil de taille, désigné par la référence général 53. Cet outil de taille, qui est de type courant est disponible dans le commerce, ne sera pas davantage décrit.

De plus, la tige 49 est solidaire, à une de ses extrémités, d'un levier de manoeuvre 55 qui est fixé, par son extrémité libre, à un arceau de manoeuvre 57 dans lequel est ménagée une série de perçages 59. Une goupille de blocage 61 est montée de manière amovible sur une des branches du cadre 47 et coopère avec l'un des perçages 49.

Dans l'exemple illustré, la fixation de l'outil 53 sur la tige 49 s'effectue au moyen d'un manchon 54 qui est réalisé en deux demi-coquilles. Une de ses demi-coquilles est solidaire de l'outil 53 tandis que l'autre demi-coquille est fixée de manière amovible (par exemple par vis) sur la première demi-coquille pour envelopper la tige 49 et verrouiller en rotation l'outil 53 par rapport à la tige 49.

Pour tailler une haie à l'aide du dispositif décrit ci-dessus, on monte la poutre 1 sur les pieds 3 en engageant les pattes 17 à l'intérieur des rainures longitudinales 15. L'horizontalité de la poutre 1 est réglée en modifiant la position des jambes d'appui 7 par pivotement de celles-ci à l'intérieur des manchons 9, de telle façon que les deux jambes 7 et le montant central 5 soient en appui sur le sol. On monte ensuite le chariot intermédiaire 19 sur la poutre 1 en engageant les roues 25 dans les rainures longitudinales 27. Puis, on fixe l'outil 53 sur la tige 49. On voit donc que l'installation du dispositif est particulièrement rapide et commode.

Le positionnement dans l'espace de l'outil 53 peut alors être réglé en faisant pivoter la tige 49 autour de l'axe 51 qui forme un premier axe de pivotement, et/ou en faisant tourner l'arbre 44 autour de l'axe 41 qui forme un second axe de pivotement. Ces deux rotations sont facilitées par le guidon 45 qui permet à l'opérateur d'orienter avec précision l'outil 53. Lorsque la position souhaitée de l'outil autour de l'axe 51 est obtenue, l'opérateur immobilise la tige 49 en engageant la goupille 61 dans le perçage 59 correspondant à cette position. Il lui est ensuite toujours possible de faire pivoter l'arbre 43 et donc l'outil 53 autour de l'axe 41. L'axe 51 évolue alors dans un plan vertical parallèle à la poutre 1. On peut également bloquer l'arbre 43 en le rendant solidaire du manchon 39 au moyen d'un boulon de verrouillage 40 monté en travers du manchon 39 pour prendre appui sur l'arbre 43.

Pour tailler des haies de grande longueur, il peut être nécessaire de disposer d'au moins deux poutres 1, afin de ne pas avoir à désengager les roues 5 des rainures 27. Il suffit alors de raccorder une nouvelle poutre à l'une des extrémités de la poutre déjà montée en emmanchant les rainures longitudinales 15 de la deuxième poutre sur les pattes 17 du pied 3 déjà en place et en reliant de façon analogue l'autre extrémité de la nouvelle poutre à un troisième pied équipé de pattes 17 engagées dans les rainures longitudinales 15 de la nouvelle poutre.

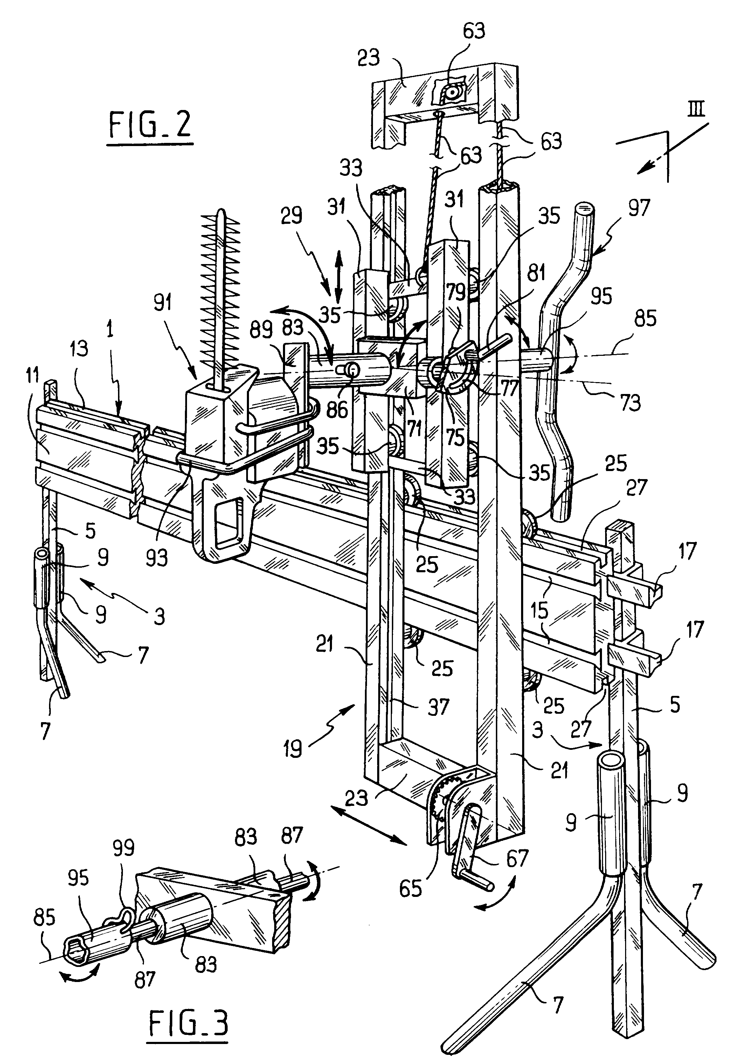

Aux figures 2 et 3, on a représenté un second mode de réalisation d'un dispositif taille-haie selon l'invention. Dans ce mode de réalisation, les pièces identiques à celles de la figure 1 ont été identifiées avec les mêmes références numériques. En particulier le dispositif comporte comme précédemment, un chariot porte-outil 29 qui est monté pour coulisser sur un chariot intermédiaire 19, lui-même monté pour coulisser sur une poutre 1.

Une plaque pivotante 71 est montée sur le chariot porte-outil 29 pour pivoter autour d'un axe horizontal 73 sensiblement parallèle à la poutre 1. Cette plaque pivotante est de plus équipée d'un moyen de verrouillage qui comporte une plaquette 75 en forme de portion de disque, solidaire de la plaque pivotante 71 et sensiblement perpendiculaire à l'axe 73. Cette plaquette 75 présente une lumière 77 en forme d'arc de cercle centrée sur l'axe 73, traversée par une tige filetée à épaulement 79 solidaire d'un des montants 31 du chariot porte-outil. Une poignée 81, taraudée à une de ses extrémités, est vissée sur la tige filetée 79 et prend appui sur la plaquette 75 pour immobiliser celle-ci contre l'épaulement de la tige filetée 79 dans une position angulaire souhaitée autour de l'axe 73.

La plaque pivotante 71 porte un manchon 83 d'axe 85 sensiblement perpendiculaire à l'axe 73. Ce manchon 83 est traversé par un arbre 87 (visible seulement à la figure 3) qui peut tourner à l'intérieur du manchon 83 autour de l'axe 85. Un boulon de verrouillage 86 équipe le manchon 83 pour immobiliser l'arbre 87. L'arbre 87 est équipé, à une de ses extrémités, d'un support 89 pour un outil de taille 91. La fixation de cet outil sur le support 89 est ici réalisée au moyen d'une sangle 93, mais on pourra bien entendu prévoir tout autre dispositif de fixation, comme par exemple une fixation par vis.

Comme cela est mieux visible à la figure 3, l'extrémité de l'arbre 87 qui est opposée au support 89 débouche à l'extérieur du manchon 83 et est raccordée de manière démontable à une extrémité tubulaire 95 d'un guidon 97 (visible à la figure 2). Dans l'exemple illustré, l'extrémité tubulaire 95 coiffe l'extrémité de l'arbre 87 et la liaison de ces deux extrémités est assurée au moyen d'une goupille 99 du type goupille β, celle-ci traversant des perçages radiaux ménagés dans ces deux extrémités. La liaison du guidon 97 à l'arbre 87 est ainsi aisément démontable.

L'invention n'est pas limitée au mode de réalisation qui vient d'être décrit, mais englobe au contraire toutes variantes reprenant, avec des moyens équivalents, les caractéristiques essentielles telles que revendiquées. Par exemple, bien que le chariot porte-outil et le chariot intermédiaire aient été décrits avec des roues engagées dans des rainures pour permettre un coulissement sur l'organe les supportant, il est bien entendu possible de prévoir un autre type de montage à coulissement.

De même, bien que l'on ait décrit un chariot porte-outil dont le déplacement vertical est commandé par un treuil, il est également possible de prévoir d'autres types de moyen d'entraînement. En particulier, on pourra prévoir de relier le câble à un contrepoids ou à un dispositif à ressort équilibrant le poids du chariot porte-outil et de l'outil qui lui est associé afin de permettre un déplacement rapide et aisée du chariot et de l'outil.

On pourra également prévoir une poutre profilée en C, le chariot intermédiaire étant alors équipé de roues montées pour coulisser à l'intérieur des ailes du profilé.

Bien que les pieds articulés aient été illustrés selon un montage dans des manchons tubulaires, on peut monter les pieds de façon amovible selon d'autres modes de réalisation, par exemple en les disposant dans un profilé en U fixé au montant central 5, les pieds coudés étant retenus dans le profilé par un lien flexible associé à un levier articulé en porte-à-faux.

L'organe de manoeuvre, précédemment illustré sous la forme d'un guidon, peut aussi être réalisé sous la forme d'un volant.

## Revendications

1. Dispositif taille-haie comportant un support (54; 89) pour un outil (53), ce support (89) étant porté par un chariot porte-outil (29) qui est monté pour coulisser verticalement sur un chariot intermédiaire (19) lui-même monté pour coulisser sur une poutre horizontale (1) associée à un piètement (3), caractérisé en ce que le chariot intermédiaire comporte un cadre (19) comprenant deux montants verticaux (21) formant des glissières pour le coulissement du chariot porte-outil (29), ce chariot porte-outil (29) étant équipé de roues (35) coopérant avec les montants verticaux (21).

2. Dispositif taille-haie selon la revendication 1, caractérisé en ce que la poutre horizontale (1) est réalisée sous la forme d'un profilé de section rectangulaire fixé sur le piètement (3) de telle façon que le grand côté de cette section s'étende verticalement, le chariot intermédiaire (19) étant monté pour coulisser sur les bords horizontaux du profilé.

3. Dispositif taille-haie selon la revendication 2, caractérisé en ce que le chariot intermédiaire est équipé de roues (25) coopérant avec les deux bords horizontaux (13) de la poutre (1)

4. Dispositif taille-haie selon l'une des revendications précédentes, caractérisé en ce que le chariot porte-outil (29) est suspendu à un câble (63) enroulé sur un treuil de manoeuvre (65) disposé en partie basse du chariot intermédiaire (19), ce câble étant renvoyé en partie haute du chariot intermédiaire (19).

5. Dispositif taille-haie selon l'une des revendications précédentes, caractérisé en ce que le piétement comprend au moins deux pieds (3) comportant chacun un montant central (5) d'axe sensiblement vertical et deux jambes d'appui coudées (7) ayant une extrémité montée sur le montant central (5) pour pivoter autour d'un axe sensiblement parallèle à ce montant.

6. Dispositif taille-haie selon la revendication 5, caractérisé en ce que les jambes d'appui (7) comprennent des tubes montés dans des manchons (9) fixés au montant central (5).
